# FASCICULE DE BREVET EUROPEEN

(11) **EP 2 792 008 B1**
(45) Date de publication et mention de la délivrance du brevet: **14.09.2016**
(21) Numéro de dépôt: 12813922.7
(22) Date de dépôt: 13.12.2012
(51) Int. Cl.: H01M 8/04, H01M 8/10

(54) **PROCÉDÉ POUR ÉVACUER DES GOUTTELETTES D'EAU PRÉSENTES À L'INTÉRIEUR DE CANAUX D'UNE PILE À COMBUSTIBLE ET DISPOSITIF DE MISE EN OEUVRE DU PROCÉDÉ.**
VERFAHREN ZUR ENTFERNUNG VON WASSERTRÖPFCHEN INNERHALB VON KANÄLEN EINER BRENNSTOFFZELLE UND VORRICHTUNG ZUR DURCHFÜHRUNG DES VERFAHRENS
PROCESS FOR REMOVAL OF WATER DROPLETS WITHIN CHANNELS OF A FUEL CELL AND DEVICE FOR PERFORMING THE PROCESS

(30) Priorité: 13.12.2011 FR 1161534
(43) Date de publication de la demande: 22.10.2014
(73) Titulaire: Peugeot Citroën Automobiles SA, 78140 Vélizy Villacoublay (FR)
(72) Inventeur: FOUQUET, Nicolas, F-73200 Gilly Sur Isere (FR); GOHLKE, Marc, 69270 St Romain au Mont d'Or (FR); GOULET, Remi, F-78000 Versailles (FR); JERMANN, Cyril, F-75005 Paris (FR)
(86) Numéro de dépôt international: PCT/FR2012/052923
(87) Numéro de publication internationale: WO 2013/088080

(56) Documents cités:
- EP-A1- 1 840 994
- DE-A1- 4 318 818
- DE-A1-102009 006 129
- FR-A1- 2 837 025
- US-A1- 2007 178 341

## Description

### Domaine technique de l'invention.

L'invention relève du domaine des procédés et dispositifs pour purger des canaux constitutifs d'une pile à combustible. Elle a pour objet un tel procédé ainsi qu'un dispositif pour mettre en oeuvre un tel procédé.

### Etat de la technique.

Une pile à combustible est un convertisseur d'une énergie chimique en une énergie électrique mettant en oeuvre une réaction électrochimique faisant intervenir divers réactifs. Parmi ces réactifs, on distingue un comburant tel que de l'air enrichi ou non en oxygène, voire d'oxygène pur ainsi qu'un combustible tel que de l'hydrogène. On connaît plus particulièrement une pile à combustible du type « PEMFC », dénommée d'après l'acronyme anglo-saxon de « Proton Exchange Membrane Fuel Cells », qui désigne une pile à combustible à membrane d'échange de protons. Une telle pile comprend un assemblage de plusieurs centaines de cellules qui sont montées en série électriquement et en parallèle hydrauliquement.

Chaque cellule comprend une membrane électrolytique qui est interposée entre deux plaques bipolaires. La membrane électrolytique est également interposée entre deux couches de diffusion qui sont disposées chacune entre la membrane électrolytique et une plaque bipolaire correspondante. Une couche de platine, formant le catalyseur de la réaction électrochimique, est interposée entre la membrane électrolytique et chacune des couches de diffusion. Chaque couche de diffusion est associée à une plaque bipolaire respective avec laquelle elle détermine conjointement un réseau de canaux de circulation d'un des réactifs. Chaque cellule comprend une zone anodique et une zone cathodique. La zone anodique comprend un premier réseau de canaux de circulation à l'intérieur duquel circule l'hydrogène tandis que la zone cathodique comprend un deuxième réseau de canaux de circulation à l'intérieur duquel circule l'oxygène. Dans la zone anodique, une partie de l'hydrogène circulant au sein des premiers canaux de circulation diffuse au travers des couches de diffusion en direction de la couche de platine. L'hydrogène est dissocié en deux protons et deux électrons. Les électrons sont collectés par la plaque bipolaire et circulent au sein d'un circuit extérieur alimentant le moteur en énergie électrique. Les protons diffusent au travers de la membrane électrolytique et se recombinent dans la zone cathodique avec les électrons. L'oxygène qui provient des deuxièmes canaux (cathodiques) de circulation alimentés en air se combine avec l'hydrogène, pour former de l'eau.

La production d'eau assure l'hydratation de la membrane électrolytique, elle est donc bénéfique. Elle assure la diffusion des protons et permet d'éviter la création de points chauds pouvant conduire au percement de la membrane électrolytique.

Un problème général posé dans le domaine réside dans une occurrence d'un excès de production d'eau qui est notamment à l'origine d'une réduction des performances et de la durée de vie de la pile à combustible. En effet, l'eau produite par la réaction électrochimique est susceptible d'engorger les deuxièmes canaux (cathodiques) de circulation et, dans une proportion moindre, les premiers canaux (anodiques) de circulation.

Il en découle une augmentation néfaste de la perte de charge de l'écoulement de l'oxygène et/ou de l'hydrogène au sein des canaux de circulation.

Il en découle aussi une augmentation de la consommation électrique d'un compresseur utilisé pour alimenter en réactifs la pile à combustible. Il en résulte une réduction préjudiciable du rendement global de la pile à combustible.

Il en découle encore une réduction d'un accès des réactifs en une zone de réaction où se produit la réaction électrochimique, une telle réduction engendrant un moindre rendement global de la pile à combustible.

Il en découle aussi une mauvaise distribution d'une densité de courant provoquant un comportement instable et difficilement contrôlable d'une tension aux bornes de la pile à combustible.

De plus, une mauvaise distribution de la densité de courant peut entraîner une création de points chauds pouvant conduire à l'assèchement de la membrane électrolytique et finalement à la destruction de la pile à combustible.

Aussi, une participation par altération et consommation des matériaux de la pile à combustible à la réaction électrochimique entraîne une auto-consommation de la pile à combustible.

En conclusion, une présence excessive d'eau dans les canaux de circulation est à l'origine d'une réduction néfaste du rendement global de la pile à combustible et peut engendrer une réduction préjudiciable de la durée de vie de la pile à combustible.

Le document FR 2,816,761 (AIR LIQUIDE) décrit un procédé de purge de l'eau incluse à l'intérieur d'un circuit hydrogène de la pile à combustible, par circulation d'hydrogène au sein de la pile à combustible. Le procédé consiste à :
- réaliser chaque cellule de la pile à combustible de manière à lui faire comporter deux compartiments anodes,
- raccorder la sortie du premier compartiment anode à l'entrée du circuit anode du second compartiment anode,
- raccorder la sortie du second compartiment anode à l'entrée du premier compartiment anode,
- raccorder les entrées des circuits anodes des cellules avec un circuit d'alimentation en hydrogène par deux branchements en parallèle contrôlés par deux organes d'ouverture-fermeture,
- piloter périodiquement l'inversion d'états desdits organes.

Un tel procédé met en oeuvre une installation de purge de l'eau incluse dans le circuit hydrogène de la pile à combustible qui comprend :
- des cellules qui sont composées chacune de deux compartiments anodes,
- un raccordement entre la sortie du premier compartiment anode et l'entrée du second compartiment anode,
- un circuit d'alimentation en hydrogène des circuits anodes des cellules par l'intermédiaire de deux branchements en parallèle et contrôlés par deux organes d'ouverture-fermeture,
- des moyens pour piloter périodiquement l'inversion d'états desdits organes.

Un tel dispositif et un tel procédé de l'art antérieur utilisent le combustible de la réaction électrochimique, à savoir l'hydrogène, pour purger les canaux de circulation ce qui est couteux et donc préférable d'éviter.

Un tel dispositif et un tel procédé de l'art antérieur ne sont finalement pas aptes à purger de manière satisfaisante les canaux de circulation anodiques d'une pile à combustible. La présente invention a l'avantage de permettre une purge efficace des réseaux de canaux anodiques et cathodiques d'une pile à combustible.

### Objet de l'invention.

Le but de la présente invention est de proposer un procédé et un dispositif pour purger une eau incluse dans des canaux de circulation d'une pile à combustible, afin d'optimiser un rendement global de la pile à combustible et préserver une durée de vie de la pile à combustible qui soit la plus longue possible, un tel procédé et un tel dispositif permettant de minimiser des pertes de charge de l'écoulement de réactifs à l'intérieur des canaux de circulation, un tel procédé et un tel dispositif permettant aussi de contenir une consommation électrique d'un compresseur utilisé pour alimenter en réactifs la pile à combustible, un tel procédé et un tel dispositif facilitant un accès des réactifs à une zone de réaction où se produit la réaction électrochimique, un tel procédé et un tel dispositif évitant une mauvaise distribution d'une densité de courant susceptible de provoquer un comportement instable et difficilement contrôlable d'une tension à des bornes de la pile à combustible, un tel procédé et un tel dispositif évitant une création de points chauds pouvant conduire à un assèchement de la membrane électrolytique, un tel procédé et un tel dispositif évitant une participation par altération et consommation de matériaux de la pile à combustible à la réaction électrochimique qui est susceptible d'entraîner une auto-consommation de la pile à combustible provoquant une asymétrie de la réaction électrochimique le long des canaux de circulation.

Un procédé de la présente invention est un procédé d'évacuation d'un reliquat d'eau qui est contenu à l'intérieur de canaux de circulation d'une pile à combustible.
Selon la présente invention, le procédé d'évacuation comprend au moins une étape de formation au cours de laquelle un bouchon d'eau est formé à au moins une entrée respective que comporte chaque canal de circulation.

L'étape de formation est suivie d'une étape de mise en circulation du bouchon d'eau à l'intérieur des canaux de circulation au cours de laquelle un fluide gazeux est insufflé à l'intérieur des canaux de circulation.
Le procédé d'évacuation comprend avantageusement une étape de déconnexion de la pile à combustible d'avec un moteur électrique qui est antérieure à l'étape de formation le procédé d'évacuation comprenant une étape de reconnexion de la pile à combustible avec le moteur électrique qui est postérieure à l'étape de mise en circulation.

Le procédé d'évacuation comporte préférentiellement :
- une augmentation d'une présence d'eau en au moins une entrée des canaux de circulation pour former des bouchons d'eau, puis
- une utilisation des bouchons d'eau pour collecter le reliquat d'eau au fur et à mesure de l'avancée des bouchons d'eau à l'intérieur des canaux de circulation depuis l'entrée vers une sortie des canaux de circulation sous l'effet d'une poussée exercée par le fluide gazeux, puis
- une évacuation hors des canaux de circulation d'un amalgame formé conjointement des bouchons d'eau et du reliquat d'eau.
Ladite étape de formation comprend par exemple une étape d'amenée d'un aérosol pour former les bouchons d'eau.

Ladite étape de formation comprend par exemple une étape d'acheminement d'eau résiduelle depuis un réservoir.

Un dispositif pour la mise en oeuvre d'un tel procédé d'évacuation comprend des moyens de mise en place d'un bouchon d'eau en entrée des canaux de circulation.

Le dispositif comprend avantageusement un compresseur d'air pour insuffler un flux d'air à l'intérieur des canaux de circulation.
Un véhicule automobile de la présente invention est un véhicule équipé d'une pile à combustible qui est pourvue d'un tel dispositif.

### Description des figures.

D'autres caractéristiques et avantages de la présente invention apparaîtront à la lecture de la description qui va être faite d'exemples de réalisation, en relation avec les figures des planches annexées, dans lesquelles :
La figure 1 est une vue schématique en coupe d'une pile à combustible.
La figure 2 est une vue schématique de détail de la pile à combustible.
La figure 3 est une vue schématique d'un procédé de la présente invention qui est mis en oeuvre pour purger des canaux de circulation de la pile illustrée sur les figures précédentes.
Les figures 4a à 4e sont des vues schématiques successives d'étapes du procédé représenté sur la figure 3.
La figure 5 est une vue schématique d'une première variante de réalisation du procédé illustré sur les figures 4a à 4e.
Les figures 6 à 9 sont des vues schématiques d'étapes respectives d'une deuxième variante de réalisation du procédé illustré sur les figures 4a à 4e.

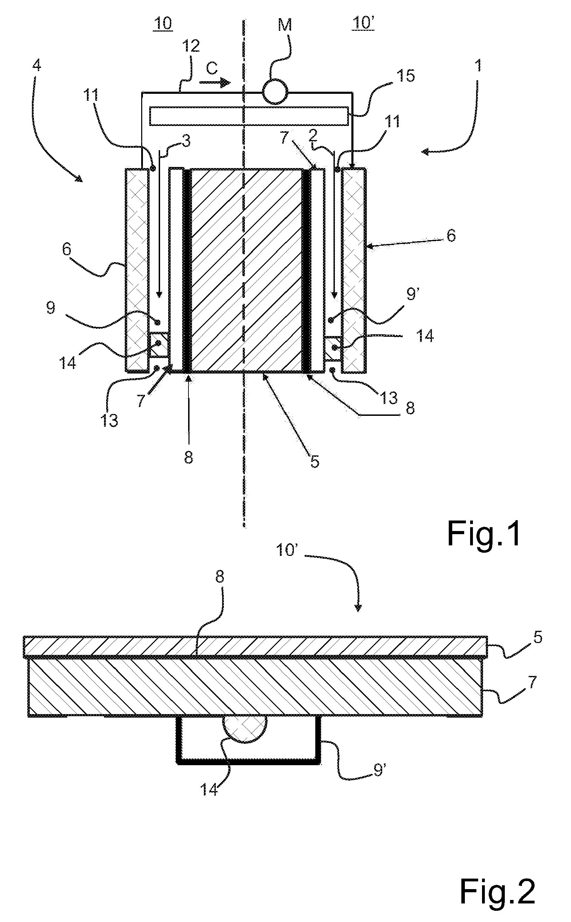

Sur la figure 1, une pile à combustible 1 de la présente invention constitue un convertisseur d'une énergie chimique en une énergie électrique à partir d'une réaction électrochimique. La pile à combustible 1 est plus particulièrement destinée à équiper un véhicule automobile pour permettre un déplacement de ce dernier. La pile à combustible s'inscrit notamment dans une stratégie de traction alternative du véhicule automobile, mettant en oeuvre un moteur thermique et/ou un moteur électrique M. Dans ce cas-là, la pile à combustible est prévue pour alimenter en énergie électrique, et plus particulièrement en courant continu C, le moteur électrique M. Toutefois, la présente invention trouve des applications avantageuses pour une pile à combustible 1 utilisé pour d'autres applications mettant en oeuvre des appareils électriques variés et relativement quelconques.

Pour la mise en oeuvre de ladite réaction électrochimique, la pile à combustible 1 fait intervenir divers réactifs parmi lesquels : un comburant, tel que de l'air enrichi ou non en oxygène 2, voire de l'oxygène pur, et un combustible, tel que de l'hydrogène 3. La pile à combustible 1 est une pile à combustible du type « PEMFC », dénommée d'après l'acronyme anglo-saxon de « Proton Exchange Membrane Fuel Cells » qui désigne une pile à combustible à membrane d'échange de protons. Une telle pile à combustible 1 comprend un assemblage de plusieurs centaines de cellules 4 qui sont montées en série électriquement et en parallèle hydrauliquement.

Chaque cellule comprend une membrane électrolytique 5, par exemple réalisée en un polymère conducteur cationique, tel que le nafion ou composé analogue. La membrane électrolytique 5 est par exemple d'une épaisseur de l'ordre de 20 µm et est interposée entre deux plaques bipolaires 6. La membrane électrolytique 5 est également interposée entre deux couches de diffusion 7 qui sont réalisées en fibres de carbone ou analogue et qui sont disposées chacune entre la membrane électrolytique 5 et une plaque bipolaire correspondante 6. Une couche de platine 8 est déposée sur chaque couche de diffusion 7 en étant interposée entre la membrane électrolytique 5 et chacune des couches de diffusion 7. La couche de platine 8 constitue un catalyseur de la réaction électrochimique. Le catalyseur est par exemple composé de platine ou d'un matériau analogue. Les plaques bipolaires comportent des canaux de circulation 9,9' respectifs d'un des réactifs à l'intérieur desquels ces derniers circulent sous forme gazeuse.

Chaque cellule 4 comprend une zone anodique 10 et une zone cathodique 10'. La zone anodique 10 comprend un premier canal de circulation 9 à l'intérieur duquel circule l'hydrogène 3 tandis que la zone cathodique 10' comprend un deuxième canal de circulation 9' à l'intérieur duquel circule l'oxygène 2.

Dans la zone anodique 10, une partie de l'hydrogène 3 circulant au sein des premiers canaux de circulation 9 diffuse au travers des couches de diffusion 7 en direction de la couche de platine 8. L'hydrogène 3 est dissocié en deux protons et deux électrons. Les électrons sont collectés par la plaque bipolaire 6 et circulent au sein d'un circuit extérieur 12 alimentant le moteur électrique M en énergie électrique. Les protons diffusent au travers de la membrane électrolytique 5 et se recombinent dans la zone cathodique 10' avec les électrons et l'oxygène 2 qui provient des deuxièmes canaux de circulation 9' pour former d'un reliquat d'eau 14 qui est constitué de gouttelettes et/ou de films d'eau 14.

Sur la figure 2, qui représente partiellement la zone cathodique 10', les gouttelettes et/ou des films d'eau 14 produits par la réaction électrochimique se répandent à l'intérieur des deuxièmes canaux de circulation 9' et tendent à envahir ces derniers, ainsi qu'accessoirement les premiers canaux de circulation 9. La production de gouttelettes et/ou de films d'eau 14 assure l'hydratation de la membrane électrolytique 5. Elle facilite la diffusion des protons et permet d'éviter la création de points chauds pouvant conduire au percement de la membrane électrolytique 5. Toutefois, il est préférable que les gouttelettes et/ou les films d'eau 14 n'obstruent pas totalement et même majoritairement les canaux de circulation 9,9'.

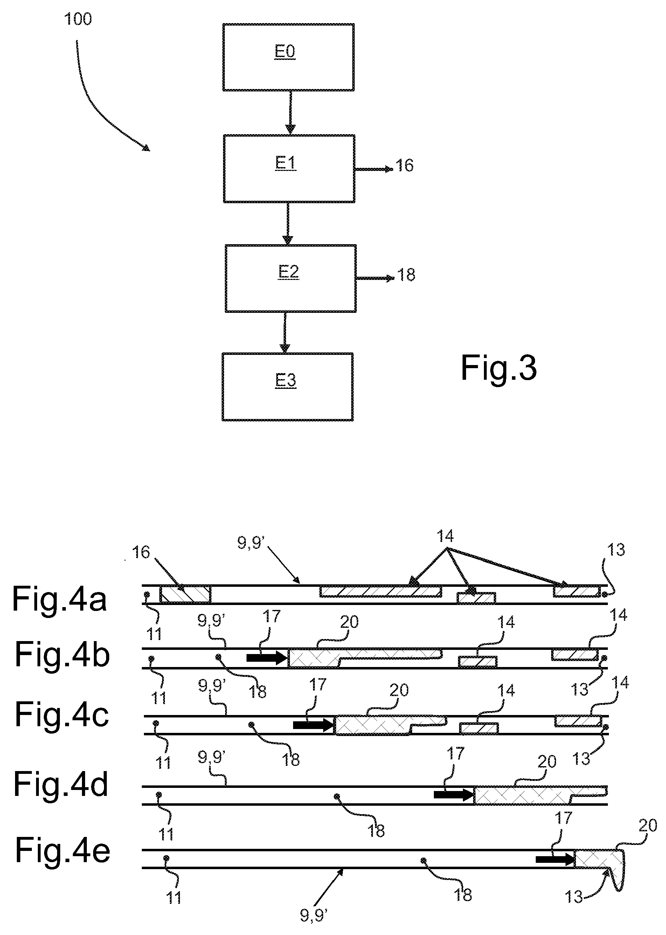

Pour éviter une obstruction des canaux de circulation 9,9', la pile à combustible 1 met en oeuvre un procédé d'évacuation 100 de telles gouttelettes et/ou de films d'eau 14 qui est schématiquement illustré sur la figure 3.

Selon la présente invention, le procédé d'évacuation 100 comprend au moins :
- une étape de formation E1 au cours de laquelle un bouchon d'eau 16 est formé à une entrée respective 11 que comporte chaque canal de circulation 9,9',
- une étape de mise en circulation E2 du bouchon d'eau 16 à l'intérieur des canaux de circulation 9,9' au cours de laquelle un fluide gazeux 18 est insufflé à l'intérieur des canaux de circulation 9,9',
   de telle sorte que le bouchon d'eau 16 collecte les gouttelettes et/ou films d'eau 14 au cours de sa progression à l'intérieur des canaux de circulation 9,9', et ainsi assure la purge des canaux de circulation 9,9'.

Le fluide gazeux 18 est préférentiellement constitué d'air, voire d'oxygène 2 ou d'hydrogène 3.

Autrement dit, en se reportant sur les figures 4a, 4b, 4c, 4d et 4e et à l'encontre des habitudes prises dans le domaine qui préconise une maîtrise d'une quantité d'eau incluse dans les canaux de circulation 9,9', la présente invention propose :
- dans un premier temps, d'augmenter une présence d'eau en entrée 11 des canaux de circulation 9,9' pour former des bouchons d'eau 16, tel que représenté sur la figure 4a, puis
- dans un deuxième temps, d'utiliser les bouchons d'eau 16 pour collecter les gouttelettes et/ou les films d'eau 14 au fur et à mesure de l'avancée des bouchons d'eau 16 à l'intérieur des canaux de circulation 9,9' depuis l'entrée 11 vers une sortie 13 des canaux de circulation 9,9' sous l'effet d'une poussée 17 exercée par un fluide gazeux 18, tel que représenté sur les figures 4b, 4c et 4d, puis
- dans un troisième temps, évacuer hors des canaux de circulation 9,9' un amalgame 20 formé conjointement des bouchons d'eau 16 et des gouttelettes et/ou des films d'eau 14, tel que représenté sur la figure 4e.

Le fluide gazeux 18 est préférentiellement l'un quelconque de l'hydrogène 3 et de l'oxygène.

Périodiquement, c'est-à-dire à fréquence fixe régulière, ou bien selon une occurrence de certains évènements de contrôle, c'est-à-dire selon un besoin et/ou une alerte prédéterminés, le procédé d'évacuation 100 de la présente invention comprend une pluralité d'étapes E0, E1, E2, E3, dont :
- une étape de déconnexion E0 de la pile à combustible 1 d'avec le moteur électrique M,
- ladite étape de formation E1,
- ladite étape de soufflage E2,
- une étape de reconnexion E3 de la pile à combustible 1 avec le moteur électrique M.

L'occurrence de certains évènements de contrôle est par un franchissement à la hausse d'une température-seuil de la pile à combustible 1, ou alors un franchissement à la hausse d'un seuil d'hygrométrie mesuré en entrée 11 des canaux de circulation 9,9', ou encore un franchissement à la hausse d'une consommation électrique d'un compresseur à air 27 nécessaire à la mise en oeuvre de la présente invention.

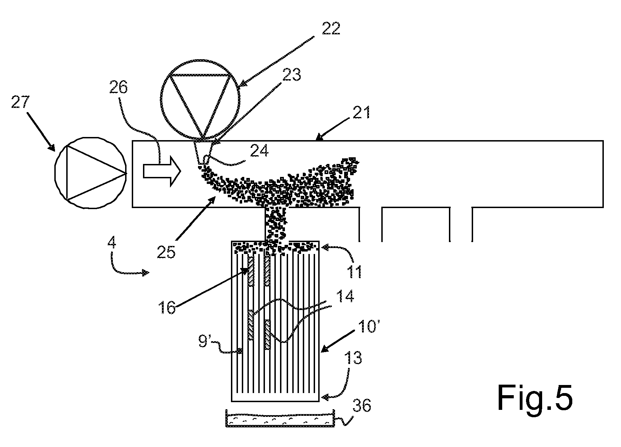

Sur les figures 5 à 9 qui illustrent plus particulièrement la zone cathodique 10' de variantes de réalisation de la présente invention, les deuxièmes canaux de circulation 9' sont aménagés en parallèle les uns aux autres. D'un point de vue hydraulique, les réactifs, oxygène 2 notamment, sont à l'état gazeux et sont distribués au sein des cellules 4 par l'intermédiaire d'une canalisation principale respective 21.

Selon les variantes de réalisation de la présente invention illustrées sur les figures 5 à 9, la canalisation principale 21 est équipée du compresseur à air 27 qui est à même de générer un flux d'air 26 dont une circulation à l'intérieur de la canalisation principale permet d'exercer la poussée 17 précédemment décrite.

Selon une première variante de réalisation de la présente invention qui est illustrée sur la figure 5, une pompe à eau 22 est en relation avec un gicleur 23 qui comprend un débouché 24 disposé à l'intérieur de la canalisation principale 21. La pompe à eau 22 est à même de délivrer un aérosol 25 d'eau par l'intermédiaire du débouché 24 du gicleur 23. L'aérosol 25 est principalement constitué de gouttelettes de dimension suffisamment petites pour être aisément véhiculées par le flux d'air 26 généré par le compresseur à air 27. Autrement dit, ce dernier est prévu pour délivrer le flux d'air 26 à l'intérieur de la canalisation principale 21 de manière à amener l'aérosol 25 aux entrées 11 des deuxièmes canaux de circulation 9'. L'aérosol 25 se répartit équitablement aux diverses entrées 11 pour y générer les bouchons d'eau 16 par coalescence, puis s'agglomèrent aux gouttelettes et/ou aux films d'eau 14 pour former l'amalgame 20. Ce dernier es évacué comme décrit précédemment.

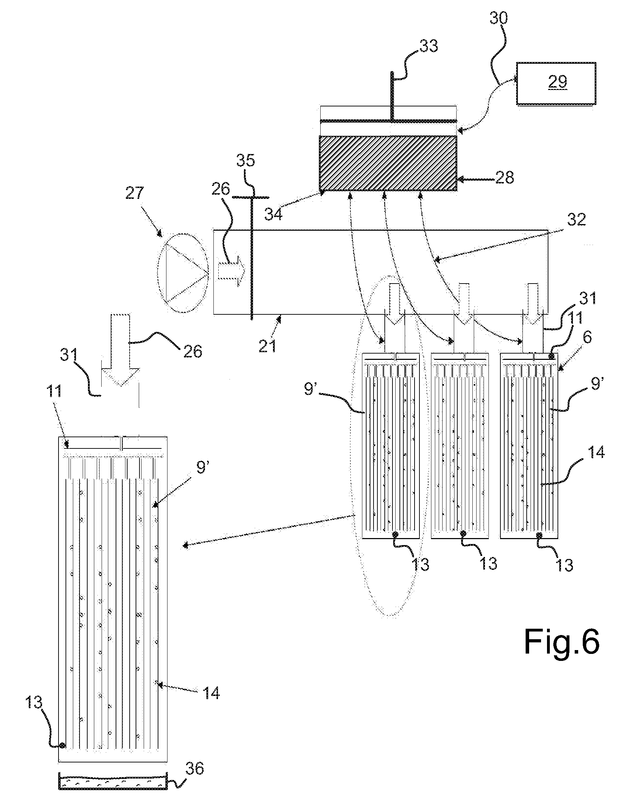

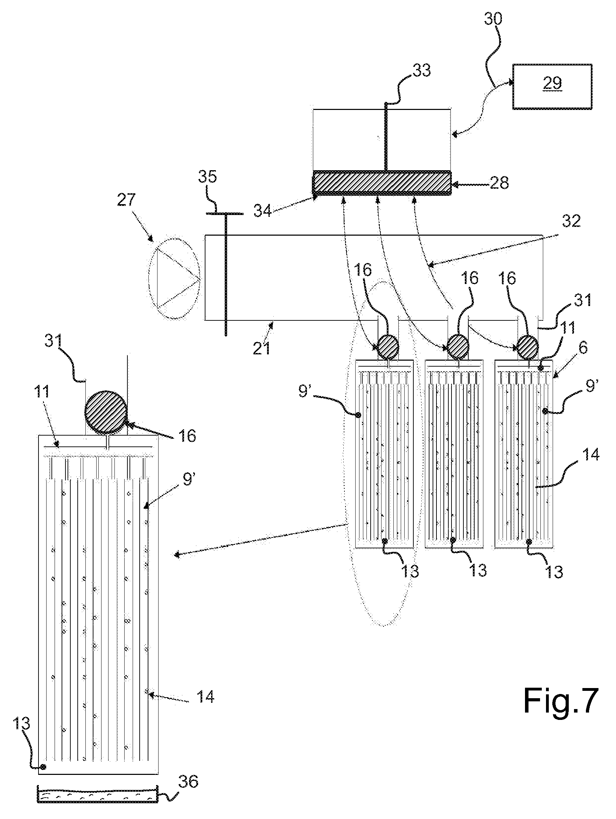

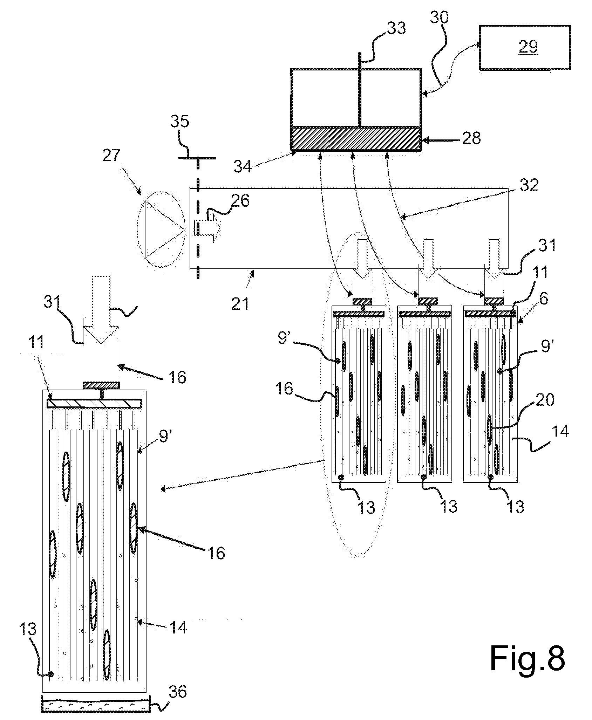

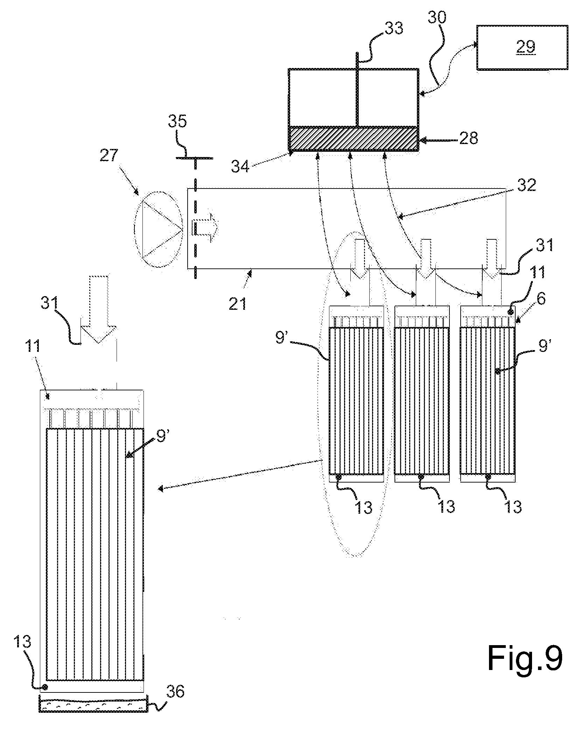

Selon une deuxième variante de réalisation de la présente invention dont des étapes successives sont illustrées respectivement sur les figures 6, 7, 8 et 9, une durite d'injection d'eau 28 qui est en relation avec un réservoir 29 d'eau résiduelle 34, par l'intermédiaire d'une conduite de circulation d'eau 30. La durite d'injection d'eau 28 est également en relation avec un réservoir tampon 31 dont est pourvue chaque cellule 4. Une telle relation est notamment réalisée par l'intermédiaire de conduits flexibles d'acheminement d'eau 32. Le compresseur à air 27 fait circuler le flux d'air 26 à l'intérieur de la canalisation principale 21, tel que représenté sur la figure 6. Un piston 33 ou analogue est à même de faire circuler l'eau résiduelle 34 depuis la durite d'injection d'eau 28 jusqu'aux différents réservoirs tampons 31, tel que représenté sur la figure 7. Lors de cette circulation une vanne 35 équipant la canalisation principale 21 est fermée pour empêcher une circulation du flux d'air 26. Puis, la vanne 35 est ouverte pour laisser circuler le flux d'air 26 qui permet la formation des bouchons d'eau 16 à partir de l'eau résiduelle amenée aux réservoirs tampons 31, tel que représenté sur la figure 8. Enfin, sur la figure 9, l'amalgame 20 est évacué des plaques bipolaires 6.

Selon une troisième variante de réalisation de la présente invention, les caractéristiques de la deuxième variante de réalisation sont reprises à l'identique pour l'alimentation en eau spécifiquement de chaque canal de circulation 9' et non pas pour l'ensemble des canaux de circulation 9' pris collectivement.

Selon une quatrième variante de réalisation de la présente invention, les débits respectifs des réactifs, oxygène 2 et hydrogène 3, sont augmentés de manière à accroître une production de gouttelettes et/ou de films d'eau 14 à l'intérieur des canaux de circulation 9,9' à partir d'une mise en oeuvre amplifiée de la réaction électrochimique. Ces dispositions sont telles que par croissance intrinsèque les gouttelettes et/ou films d'eau 14 constituent eux-mêmes les bouchons d'eau 16.

Quelque soit la variante de réalisation de la présente invention, un collecteur 36 d'amalgame 20 est susceptible d'équiper les sorties 13 des canaux de circulation 9,9' de manière à récolter l'amalgame 20 et préférentiellement de le déverser à l'intérieur d'une réserve d'eau, tel que le réservoir 29 de la deuxième variante de réalisation.

## Revendications

1. Procédé d'évacuation (100) d'un reliquat d'eau (14) qui est contenu à l'intérieur de canaux de circulation (9,9') d'une pile à combustible (1), **caractérisé en ce que** le procédé d'évacuation (100) comprend au moins une étape de formation (E1) au cours de laquelle un bouchon d'eau (16) est formé à au moins une entrée respective (11) que comporte chaque canal de circulation (9,9'), cette étape de formation (E1) étant suivie d'une étape de mise en circulation (E2) du bouchon d'eau (16) à l'intérieur des canaux de circulation (9,9') au cours de laquelle un fluide gazeux (18) est insufflé à l'intérieur des canaux de circulation (9,9').

2. Procédé d'évacuation (100) selon la revendication 1, **caractérisé en ce que** le procédé d'évacuation (100) comprend une étape de déconnexion (E0) de la pile à combustible (1) d'avec un moteur électrique (M) qui est antérieure à l'étape de formation (E1) et **en ce que** le procédé d'évacuation (100) comprend une étape de reconnexion (E3) de la pile à combustible (1) avec le moteur électrique (M) qui est postérieure à l'étape de mise en circulation (E2).

3. Procédé d'évacuation (100) selon la revendication 2, **caractérisé en ce qu'**il est effectué à fréquence fixe régulière ou selon une occurrence de certains évènements de contrôle.

4. Procédé d'évacuation (100) selon la revendication 3, caractérisé en ce l' occurrence de certains évènements de contrôle est par un franchissement à la hausse d'une température seuil de la pile à combustible ou un franchissement à la hausse d'un seuil d'hygrométrie mesuré en entrée des canaux de circulation (9,9') ou encore d'un franchissement à la hausse d'une consommation électrique d'un compresseur à air (27) pour insuffler un flux d'air (26) à l'intérieur des canaux de circulation (9, 9').

5. Procédé d'évacuation (100) selon la revendication 1, **caractérisé en ce que** le procédé d'évacuation (100) comporte :
- une augmentation d'une présence d'eau en au moins une entrée (11) des canaux de circulation (9,9') pour former des bouchons d'eau (16), puis
- une utilisation des bouchons d'eau (16) pour collecter le reliquat d'eau (14) au fur et à mesure de l'avancée des bouchons d'eau (16) à l'intérieur des canaux de circulation (9,9') depuis l'entrée (11) vers une sortie (13) des canaux de circulation (9,9') sous l'effet d'une poussée (17) exercée par le fluide gazeux (18), puis
- une évacuation hors des canaux de circulation (9,9') d'un amalgame (20) formé conjointement des bouchons d'eau (16) et du reliquat d'eau (14).

6. Procédé d'évacuation (100) selon l'une quelconque des revendications précédentes, **caractérisé en ce que** ladite étape de formation (E1) comprend une étape d'amenée d'un aérosol (25) pour former les bouchons d'eau (16).

7. Procédé d'évacuation (100) selon l'une quelconque des revendications précédentes, **caractérisé en ce que** ladite étape de formation (E1) comprend une étape d'acheminement d'eau résiduelle (34) depuis un réservoir (29).

8. Procédé d'évacuation (100) selon la revendication 6 ou la revendication 7, **caractérisé en ce que** l'alimentation en eau est spécifique à chaque canal de circulation (9') de la zone cathodique (10').

9. Dispositif pour la mise en oeuvre d'un procédé d'évacuation (100) selon l'une quelconque des revendications précédentes, **caractérisé en ce que** le dispositif comprend des moyens (22, 23 ,24 ; 28, 29, 30, 32, 33 ; 1) de mise en place d'un bouchon d'eau (16) en entrée (11) des canaux de circulation (9, 9').

10. Dispositif selon la revendication 9, **caractérisé en ce que** le dispositif comprend un compresseur d'air pour insuffler un flux d'air (26) à l'intérieur des canaux de circulation (9, 9').

11. Véhicule automobile équipé d'une pile à combustible (1) pourvue d'un dispositif selon l'une quelconque des revendications 9 et 10.

## Patentansprüche

1. Ableitungsverfahren (100) eines Wasserrests (14), der im Inneren von Zirkulationskanälen (9, 9') einer Brennstoffzelle (1) enthalten ist, **dadurch gekennzeichnet, dass** das Ableitungsverfahren (100) mindestens einen Bildungsschritt (E1) umfasst, in dessen Verlauf ein Wasserstopfen (16) an mindestens einem jeweiligen Eingang (11), den jeder Zirkulationskanal (9, 9') umfasst, gebildet wird, wobei auf diesen Bildungsschritt (E1) ein Schritt des Inzirkulationsbringens (E2) des Wasserstopfens (16) im Inneren der Zirkulationskanäle (9, 9') folgt, in dessen Verlauf ein gasförmiges Fluid (18) in das Innere der Zirkulationskanäle (9, 9') eingeblasen wird.

2. Ableitungsverfahren (100) nach Anspruch 1, **dadurch gekennzeichnet, dass** das Ableitungsverfahren (100) einen Schritt des Trennens (E0) der Brennstoffzelle (1) von ihrem Elektromotor (M) umfasst, der vor dem Bildungsschritt (E1) liegt, und dass das Ableitungsverfahren (100) einen Schritt des Wiederanschließens (E3) der Brennstoffzelle (1) an den Elektromotor (M) umfasst, der nach dem Schritt des Inzirkulationsbringens (E2) liegt.

3. Ableitungsverfahren (100) nach Anspruch 2, **dadurch gekennzeichnet, dass** es mit regelmäßiger gleichbleibender Frequenz oder gemäß einem Auftreten bestimmter Steuerereignisse erfolgt.

4. Ableitungsverfahren (100) nach Anspruch 3, **dadurch gekennzeichnet, dass** das Auftreten bestimmter Steuerereignisse durch ein Überschreiten durch Ansteigen einer Schwellentemperatur der Brennstoffzelle oder ein Überschreiten durch Ansteigen eines Luftfeuchtigkeitsmessschwellenwerts, der am Eingang der Zirkulationskanäle (9, 9') gemessen wird, oder auch durch ein Überschreiten durch Ansteigen eines Stromverbrauchs eines Luftverdichters (27) zum Einblasen eines Luftstroms (26) in das Innere der Zirkulationskanäle (9, 9') erfolgt.

5. Ableitungsverfahren (100) nach Anspruch 1, **dadurch gekennzeichnet, dass** das Ableitungsverfahren (100) Folgendes umfasst:
- eine Erhöhung einer Gegenwart von Wasser an mindestens einem Eingang (11) der Zirkulationskanäle (9, 9'), um Wasserstopfen (16) zu bilden, dann
- ein Verwenden der Wasserstopfen (16) zum Sammeln des Wasserrests (14) im Laufe des Fortschreitens der Wasserstopfen (16) im Inneren der Zirkulationskanäle (9, 9') von dem Eingang (11) zu einem Ausgang (13) der Zirkulationskanäle (9, 9') unter der Einwirkung eines Schubs (17), der von dem gasförmigen Fluid (18) ausgeübt wird, dann
- ein Ableiten aus den Zirkulationskanälen (9, 9') eines Amalgams (20), das gemeinsam aus den Wasserstopfen (16) und dem Restwasser (14) gebildet ist.

6. Ableitungsverfahren (100) nach einem der vorhergehenden Ansprüche, **dadurch gekennzeichnet, dass** der Bildungsschritt (E1) einen Schritt des Zuführens eines Aerosols (25) zum Bilden der Wasserstopfen (16) umfasst.

7. Ableitungsverfahren (100) nach einem der vorhergehenden Ansprüche, **dadurch gekennzeichnet, dass** der Bildungsschritt (E1) einen Beförderungsschritt von Restwasser (34) von einem Tank (29) umfasst.

8. Ableitungsverfahren (100) nach Anspruch 6 oder 7, **dadurch gekennzeichnet, dass** die Wasserversorgung für jeden Zirkulationskanal (9') der Kathodenzone (10') spezifisch ist.

9. Vorrichtung zur Umsetzung eines Ableitungsverfahrens (100) nach einem der vorhergehenden Ansprüche, **dadurch gekennzeichnet, dass** die Vorrichtung Mittel (22, 23, 24; 28, 29, 30, 32, 33; 1) zum Anbringen eines Wasserstopfens (16) am Eingang (11) der Zirkulationskanäle (9, 9') umfasst.

10. Vorrichtung nach Anspruch 9, **dadurch gekennzeichnet, dass** die Vorrichtung einen Luftverdichter zum Einblasen eines Luftstroms (26) in das Innere der Zirkulationskanäle (9, 9') umfasst.

11. Kraftfahrzeug, das mit einer Brennstoffzelle (1) ausgestattet ist, die mit einer Vorrichtung nach einem der Ansprüche 9 und 10 versehen ist.

## Claims

1. A method (100) for removing traces of water (14) contained inside circulation channels (9, 9') of a fuel cell (1), **characterized in that** the removal method (100) includes at least one forming step (E1) during which a water seal (16) is formed at least at one respective inlet (11) that each circulation channel (9, 9') comprises, this forming step (E1) being followed by a step of putting into circulation (E2) of the water seal (16) in the interior of the circulation channels (9, 9') during which a gaseous fluid (18) is insufflated in the interior of the circulation channels (9, 9').

2. The removal method (100) according to claim 1, **characterized in that** the removal method (100) includes a disconnection step (E0) of the fuel cell (1) from an electric motor (M) which is prior to the forming step (E1) and **in that** the removal method (100) includes a reconnection step (E3) of the fuel cell (1) with the electric motor (M) which is after the step (E2) of putting into circulation.

3. The removal method (100) according to claim 2, **characterized in that** it is carried out at a regular fixed frequency or according to an occurrence of certain control events.

4. The removal method (100) according to claim 3, **characterized in that** the occurrence of certain control events is by an upward exceeding of a threshold temperature of the fuel cell or an upward exceeding of a hygrometry threshold measured at the inlet of the circulation channels (9, 9') or else an upward exceeding of an electrical consumption of an air compressor (27) for insufflating a flow of air (26) in the interior of the circulation channels (9, 9').

5. The removal method (100) according to claim 1, **characterized in that** the removal method (100) comprises:
- an increase of a presence of water in at least one inlet (11) of the circulation channels (9, 9') to form water seals (16), then
- a use of the water seals (16) to collect the water traces (14) as the water seals (16) advance in the interior of the circulation channels (9, 9') from the inlet (11) towards an outlet (13) of the circulation channels (9, 9') under the effect of a thrust (17) exerted by the gaseous fluid (18), then
- a removal out of the circulation channels (9, 9') of an amalgam (20) formed jointly of the water seals (16) and of the traces of water (14).

6. The removal method (100) according to any one of the preceding claims, **characterized in that** said forming step (E1) includes a step of supplying an aerosol (25) to form the water seals (16).

7. The removal method (100) according to any one of the preceding claims, **characterized in that** said forming step (E1) includes a step of conveying residual water (34) from a reservoir (29).

8. The removal method (100) according to claim 6 or 7, **characterized in that** the supplying with water is specific to each circulation channel (9') of the cathode zone (10').

9. A device for implementing a removal method (100) according to any one of the preceding claims, **characterized in that** the device includes means (22, 23, 24; 28, 29, 30, 32, 33; 1) for putting in place a water seal (16) at the inlet (11) of the circulation channels (9, 9').

10. The device according to claim 9, **characterized in that** the device includes an air compressor to insufflate a flow of air (26) in the interior of the circulation channels (9, 9').

11. A motor vehicle equipped with a fuel cell (1) provided with a device according to any one of claims 9 and 10.
